# EUROPEAN PATENT APPLICATION

(11) **EP 2 746 910 A1**
(43) Date of publication of application: **25.06.2014**
(21) Application number: 11870977.3
(22) Date of filing: 15.08.2011
(51) Int. Cl.: G06F 3/048, G06F 3/023, G06F 3/041, H03M 11/04

(54) **MOBILE ELECTRONIC DEVICE AND KEY DISPLAY PROGRAM**

(71) Applicant: Fujitsu Limited, Kawasaki-shi, Kanagawa 211-8588 (JP)
(72) Inventor: JO, Hideaki, Kawasaki-shi Kanagawa 211-8588 (JP); NAKAMURA, Hideki, Kawasaki-shi Kanagawa 211-8588 (JP); OKUMURA, Noriko, Kawasaki-shi Kanagawa 211-8588 (JP); KIKUCHI, Yoshiaki, Kawasaki-shi Kanagawa 211-8588 (JP)
(74) Representative: Ward, James Norman
(86) International application number: PCT/JP2011/068521
(87) International publication number: WO 2013/024526

(57) **Abstract**

A mobile electronic device (1) includes a touch panel (14), a display (15), and a CPU (19) that displays a key on the display (15). When the CPU (19) displays a ten key group (21) in which a plurality of column key groups each including a plurality of keys in a column are arranged side by side on the display (15), the CPU (19) displays in a switchable manner a first arrangement of the keys in which the keys in the ten-key group (21) have the same width and a second arrangement of the keys in which keys in a center column key group (21C) arranged between a right-side column key group (21B) and a left-side column key group (21A) have a larger width than the keys in the right-side column key group (21B) and the left-side column key group (21A).

## Description

### [Technical Field]

The present invention relates to a mobile electronic device and a key display program.

### [Background Art]

In a mobile electronic device including a display with a touch panel function disclosed in the Patent Literature 1, for example, it is determined which hand (a right hand or a left hand) of a user has been used for a first touch operation on the display screen of the mobile electronic device, based on the position of the area of the display screen the user firstly has touched. The mobile electronic device displays a ten-key group on the right side or the left side on the display screen, on which users can perform an input operation through a touch operation based on the determination result. This enables a user to use the ten-key group displayed on the right side or the left side on the display screen according to the first touch operation.

### Citation List

### Patent Literature

Patent Literature 1: Japanese Patent Application Laid-open No. 06-208671

### [Summary of Invention]

### [Technical Problem]

As for a tablet mobile electronic device, however, users often perform touch operations using their both hands while holding the mobile electronic device with their both hands. If the ten-key group is displayed on the right side or the left side on the display screen, therefore, the operability of the tablet mobile electronic device decreases.

Specifically, if the ten-key group is displayed on the left side on the display screen, users feel it difficult to operate the ten-key using their right hand. If the ten-key group is displayed on the right side on the display screen, users feel it difficult to operate the ten-key using their left hand.

The issue as described above may occur on other than tablet mobile electronic devices. The issue may occur on any mobile electronic device such as a mobile phone or a smart phone, which is held and operated by a user with both hands.

The technology disclosed herein aims to provide a mobile electronic device and a key display program that provide good operability to a user operating keys on the device.

### [Solution to Problem]

According to an aspect, a mobile electronic device includes a display that comprises a touch panel function; and a processor that displays a key on the display. When displaying an operation key group in which a plurality of column key groups each including a plurality of keys in a column are arranged side by side on the display, the processor displays in a switchable manner a first arrangement of the keys in which the keys in the operation key group have the same width and a second arrangement of the keys in which a predetermined key or keys in a column key group arranged between a right-side column key group and a left-side column key group in the operation key group have a larger width than the keys in the right-side column key group and the left-side column key group.

### [Advantageous Effects of Invention]

A mobile electronic device disclosed herein provides good operability to a user operating keys on the device.

### [Brief Description of Drawings]

FIG. 1 is a block diagram illustrating a configuration of a mobile electronic device according to an embodiment of the present invention.
FIG. 2 is an explanatory diagram of an external structure of the mobile electronic device according to the embodiment.
FIG. 3 is an explanatory diagram of a layout screen including a ten-key on the left side in the portrait (vertical) orientation specification of the mobile electronic device according to the embodiment.
FIG. 4 is an explanatory diagram of a layout screen including a ten-key on the left side in the landscape (horizontal) orientation specification.
FIG. 5 is an explanatory diagram of key table corresponding to a layout screen of the mobile electronic device.
FIG. 6 is an explanatory diagram of a layout screen including a ten-key having an enlarged center portion in the portrait (vertical) orientation specification.
FIG. 7 is an explanatory diagram of a layout screen including a ten-key having an enlarged center portion in the landscape (horizontal) orientation specification.
FIG. 8 is an explanatory diagram of a layout screen including a ten-key on the right side in the portrait (vertical) orientation specification.
FIG. 9 is an explanatory diagram of a layout screen including a ten-key on the right side in the landscape (horizontal) orientation specification.
FIG. 10 is an explanatory diagram of a layout screen including ten-keys on both sides in the portrait (vertical) orientation specification.
FIG. 11 is an explanatory diagram of a layout screen including ten-keys on both sides in the landscape (horizontal) orientation specification.
FIG. 12 is an explanatory diagram of a ten-key transition table.
FIG. 13 is an explanatory diagram of an operation for transition to the layout screen including the ten-key having an enlarged center portion in the portrait (vertical) orientation specification.
FIG. 14 is an explanatory diagram of an operation relating to switching the layout screen including the ten-key having an enlarged center portion between the portrait (vertical) orientation specification and the landscape (horizontal) orientation specification.
FIG. 15 is an explanatory diagram of an operation for transition to the layout screen including the ten-key having an enlarged center portion in the landscape (horizontal) orientation specification.
FIG. 16 is a flowchart illustrating a processing operation of the CPU relating to ten-key display processing.
FIG. 17 is a flowchart illustrating a processing operation of the CPU relating to key operation processing.
FIG. 18 is a flowchart illustrating a processing operation of the CPU relating to ten-key transition processing.
FIG. 19 is an explanatory diagram of a layout screen including another ten-key in the landscape (horizontal) orientation specification.
FIG. 20 is an explanatory diagram of a layout screen including a typical keyboard in the landscape (horizontal) orientation specification.
FIG. 21 is an explanatory diagram of a layout screen including another keyboard having an enlarged center portion in the landscape (horizontal) orientation specification.
FIG. 22 is an explanatory diagram of a layout screen including another keyboard on both sides in the landscape (horizontal) orientation specification.
FIG. 23 is an explanatory diagram of a mobile electronic device causing a computer to execute a key display program.

### [Embodiment for Carrying Out the Invention]

Exemplary embodiments of a mobile electronic device and a key display program disclosed herein are described below in detail with reference to the accompanying drawings. However, the embodiments herein are not intended to limit the scope of the invention. The embodiments can be combined appropriately as long as they are not contradictory to each other.

### [Embodiment]

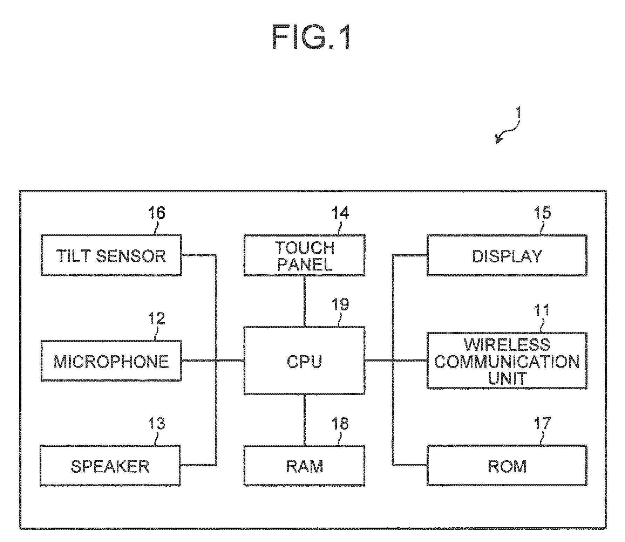

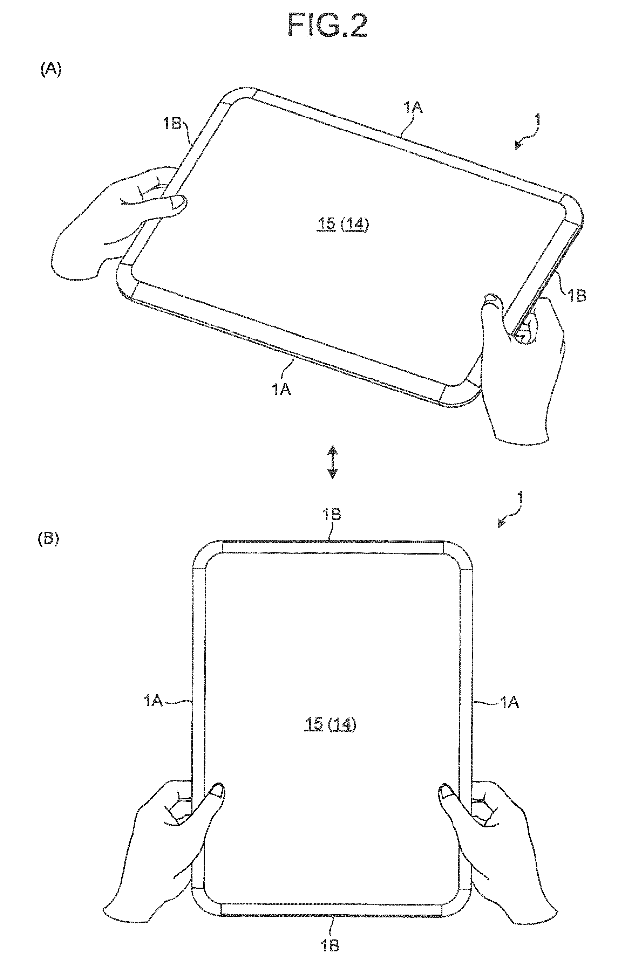

FIG. 1 is a block diagram illustrating a configuration of a mobile electronic device according to an embodiment of the present invention. FIG. 2 is an explanatory diagram of an external structure of the mobile electronic device according to the embodiment. This mobile electronic device 1 illustrated in FIG. 1 is a tablet type electronic device having dimensions of 192 mm in length, 275 mm in width, and 16.2 mm in thickness, for example. The mobile electronic device 1 can be used in the portrait (vertical) orientation or the landscape (horizontal) orientation. In landscape (horizontal) orientation specification, as illustrated in (A) in FIG. 2, the long sides 1A of the mobile electronic device 1 are located on the top and bottom of the display screen of the mobile electronic device 1, and in portrait (vertical) orientation specification, as illustrated in (B) in FIG. 2, the short sides 1B of the mobile electronic device 1 are located on the top and bottom of the display screen of the mobile electronic device 1.

The mobile electronic device 1 illustrated in FIG. 1 includes a wireless communication unit 11, a microphone 12, a speaker 13, a touch panel 14, a display 15, a tilt sensor 16, a read only memory (ROM) 17, a random access memory (RAM) 18, and a CPU 19. The wireless communication unit 11 wirelessly communicates with a not-illustrated wireless network. The microphone 12 collects audio and speech, for example. The speaker 13 externally outputs the audio and speech, for example. The touch panel 14 is mounted on the display screen of the display 15 and detects touch operations on keys displayed on the screen. The touch panel 14 may adopt a resistive film technology, a surface acoustic wave technology, infrared-based technology, an electromagnetic induction technology, or an electrostatic capacitive system. The display 15 displays various types of information on the screen and operation keys on which touch operations are detected by the touch panel 14.

The tilt sensor 16 detects a tilt with respect to a standard posture of the mobile electronic device 1. The CPU 19 determines the orientation specification of the mobile electronic device 1 out of the portrait (vertical) orientation specification and the landscape (horizontal) orientation specification based on the detection result of the tilt sensor 16. The CPU 19 displays keyboards or ten-keys in the portrait (vertical) orientation specification or the landscape (horizontal) orientation specification according to a request on the screen of the display 15.

The ROM 17 stores therein a key table corresponding to various types of layout screens in the portrait (vertical) orientation specification or the landscape (horizontal) orientation specification. Examples of the layout screens include the following four types; a layout screen including a ten-key on the left side, a layout screen including a ten-key on the right side, a layout screen including ten-keys on both sides, and a layout screen including a ten-key having an enlarged center portion. Accordingly, eight types of layout screens exist, that is, the four types in the portrait (vertical) orientation specification, and the four types in the landscape (horizontal) orientation specification.

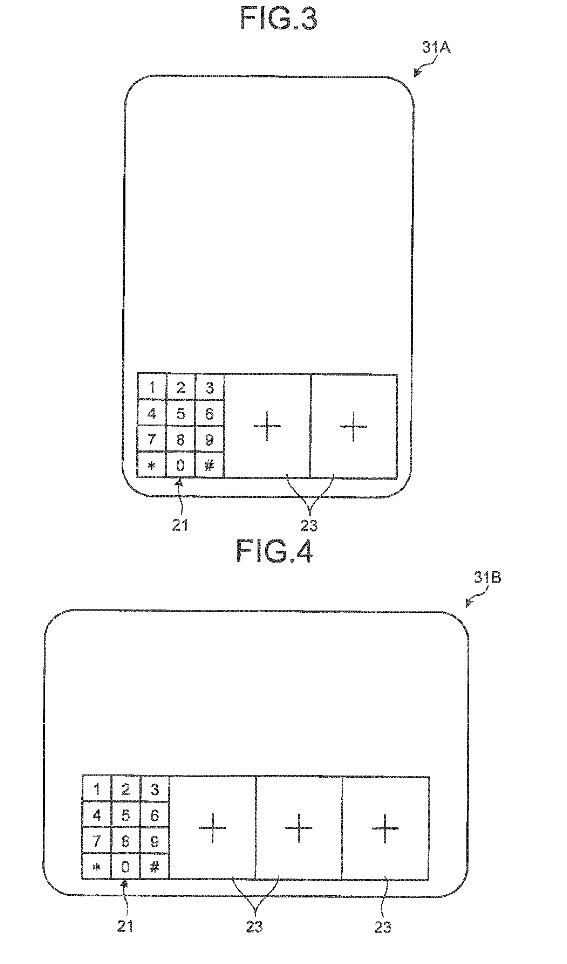

FIG. 3 is an explanatory diagram of a layout screen including a ten-key on the left side in the portrait (vertical) orientation specification. In the layout screen 31A illustrated in FIG. 3, a ten-key group 21 is displayed on the left side of the display screen in the portrait (vertical) orientation specification. In the layout screen 31A, two handwriting input screens 23 for inputting characters in handwriting are also displayed. FIG. 4 is an explanatory diagram of a layout screen including a ten-key on the left side in the landscape (horizontal) orientation specification. In the layout screen 31B illustrated in FIG. 4, the ten-key group 21 is displayed on the left side of the display screen in the landscape (horizontal) orientation specification. In the layout screen 31B, three handwriting input screens 23 are also displayed.

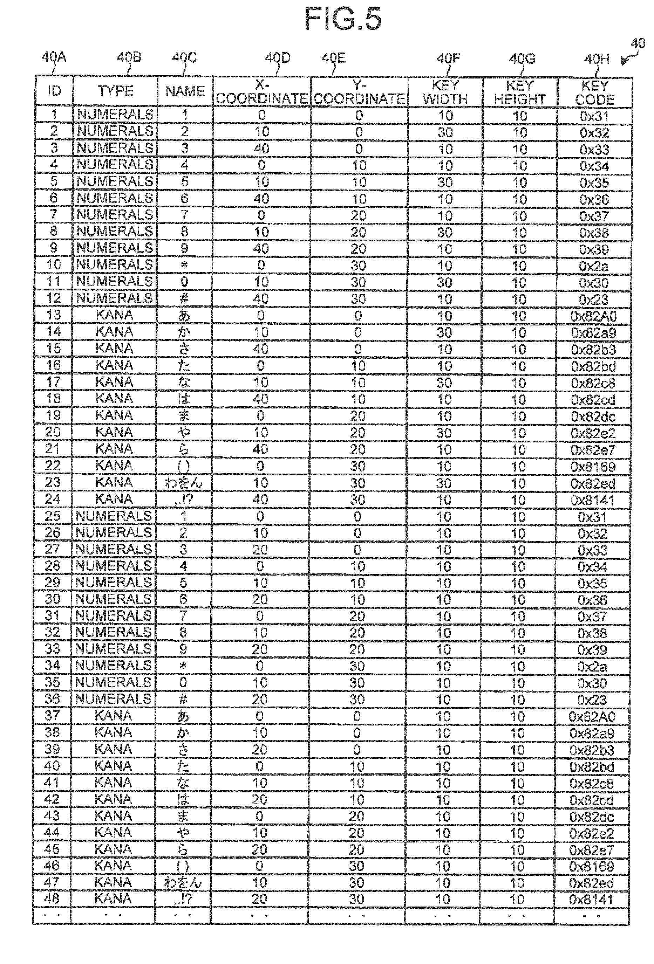

FIG. 5 is an explanatory diagram of a key table 40 corresponding to a layout screen of the mobile electronic device 1. The key table 40 illustrated in FIG. 5 manages detailed information of keys in the layout screens displayed on the display 15. The key table 40 manages IDs 40A, types 40B, names 40C, X-coordinates 40D, Y-coordinates 40E, key widths 40F, key heights 40G, and key codes 40H associated with each other. The ID 40A is used for identifying different keys depending on the different layout screens in the different specifications. The type 40B is used for identifying different types of characters depending on the different keys displayed on the screen, such as "kana" (the Japanese syllabogram) and "numerals". The name 40C is used for identifying different names corresponding to the different keys displayed on the screen. The X-coordinate 40D is used for indicating the origin of the coordinates for displaying a key on the screen. The Y-coordinate 40E is used for indicating the origin of the coordinates for displaying a key on the screen. The X-and Y-coordinates indicate coordinate values in an XY coordinate system including a certain point on the display screen of the display 15 as their origin. The key width 40F indicates the dimension of the width of a key displayed on the screen. The key height 40G indicates the dimension of the length of a key displayed on the screen. The key code 40H corresponds to detailed information of a key displayed on the screen such as a character code. As illustrated in the key table 40 in FIG. 5, the key table including the values from "1" to "24" in the ID 40A indicates the layout screen including the ten-key having an enlarged center portion in the portrait (vertical) orientation specification, and the key table including the values from "25" to "48" in the ID 40A indicates the layout screen including the ten-key on the left side in the portrait (vertical) orientation specification.

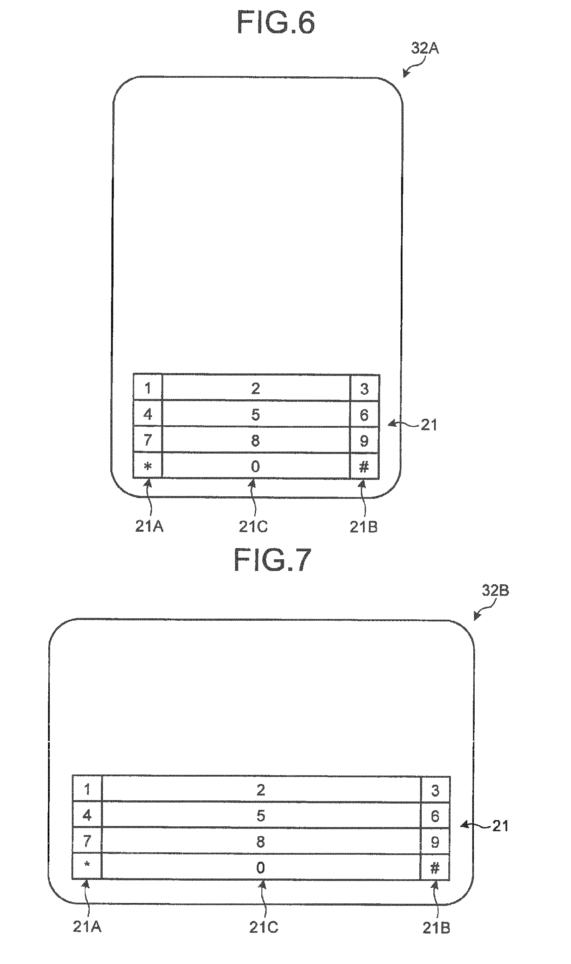

Looking at the values "1", "2", and "3" in the ID 40A in the key table 40, the value "1" in the ID 40A indicates "1" for the name 40C, "0" for the X-coordinate 40D, "0" for the Y-coordinate 40E, "10" for the key width 40F, "10" for the key height 40G, and "0x31" for the key code 40H. The value "2" in the ID 40A indicates "2" for the name 40C, "10" for the X-coordinate 40D, "0" for the Y-coordinate 40E, "30" for the key width 40F, "10" for the key height 40G, and "0x32" for the key code 40H. The value "3" in the ID 40A indicates "3" for the name 40C, "40" for the X-coordinate 40D, "0" for the Y-coordinate 40E, "10" for the key width 40F, "10" for the key height 40G, and "0x33" for the key code 40H. Accordingly, when displaying the keys of "1", "2" and "3" side by side on the display screen in the portrait (vertical) orientation specification, for example, the CPU 19 displays the key of "2" larger in width than the keys of "1" and "3" based on the values of the key width 40F, as illustrated in FIG. 6, which will be described later.

Now looking at the values "25", "26" and, "27" in the ID 40A, the value "25" in the ID 40A indicates "1" for the name 40C, "0" for the X-coordinate 40D, "0" for the Y-coordinate 40E, "10" for the key width 40F, "10" for the key height 40G, and "0x31" for the key code 40H. The value "26" in the ID 40A indicates "2" for the name 40C, "10" for the X-coordinate 40D, "0" for the Y-coordinate 40E, "10" for the key width 40F, "10" for the key height 40G, and "0x32" for the key code 40H. The value "27" in the ID 40A indicates "3" for the name 40C, "20" for the X-coordinate 40D, "0" for the Y-coordinate 40E, "10" for the key width 40F, "10" for the key height 40G, and "0x33" for the key code 40H. Accordingly, when displaying the keys of "1", "2", and "3" side by side on the display screen in the portrait (vertical) orientation specification, for example, the CPU 19 displays the keys of "1", "2", and "3" in the same dimensions based on the values of the key width 40F.

FIG. 6 is an explanatory diagram of a layout screen including the ten-key having an enlarged center portion in the portrait (vertical) orientation specification. In the layout screen 32A illustrated in FIG. 6, the ten-key group 21 is displayed on the display screen in the portrait (vertical) orientation specification. In particular, a center column key group 21C of the ten-key group 21 is enlarged and displayed in the center part of the display screen. In the layout screen 32A, a left-side column key group 21A of the ten-key group 21 is displayed on the left side of the display screen, a right-side column key group 21B of the ten-key group 21 is displayed on the right side of the display screen, and the center column key group 21C of the ten-key group 21 is enlarged and displayed in the center part of the display screen. The left-side column key group 21A includes the keys of "1", "4", "7", and "*", for example. The right-side column key group 21B includes the keys of "3", "6", "9", and "#", for example. The center column key group 21C includes the keys of "2", "5", "8", and "0", for example.

FIG. 7 is an explanatory diagram of a layout screen including a ten-key having an enlarged center portion in the landscape (horizontal) orientation specification. In the layout screen 32B illustrated in FIG. 7, the ten-key group 21 is displayed on the display screen in the landscape (horizontal) orientation specification. In particular, the center column key group 21C of the ten-key group 21 is enlarged and displayed in the center part of the display screen.

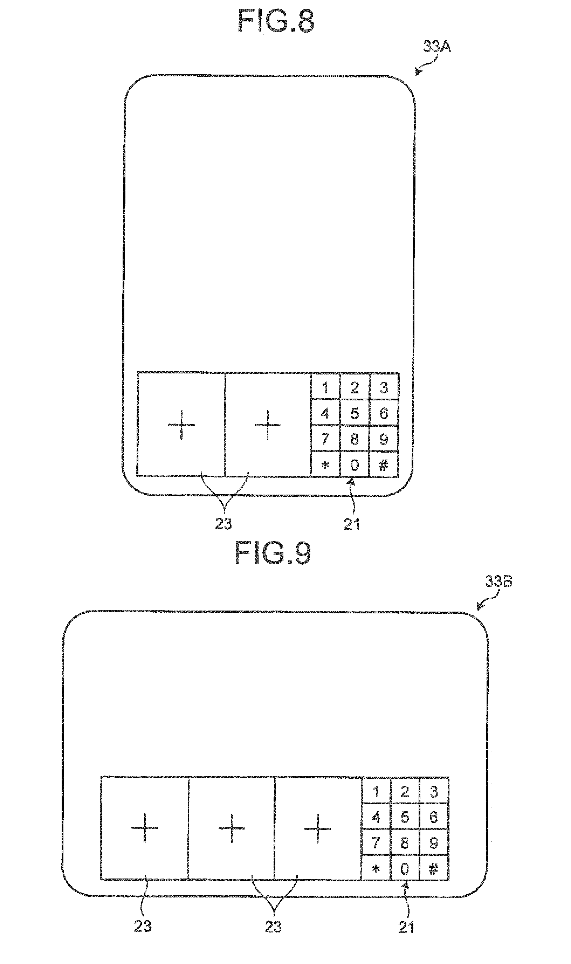

FIG. 8 is an explanatory diagram of a layout screen including a ten-key on the right side in the portrait (vertical) orientation specification. In the layout screen 33A illustrated in FIG. 8, the ten-key group 21 is displayed on the right side of the display screen in the portrait (vertical) orientation specification. In the layout screen 33A, two handwriting input screens 23 for inputting characters in handwriting are also displayed on the screen. FIG. 9 is an explanatory diagram of a layout screen including the ten-key on the right side in the landscape (horizontal) orientation specification. In the layout screen 33B illustrated in FIG. 9, the ten-key group 21 is displayed on the right side of the display screen in the landscape (horizontal) orientation specification. In the layout screen 33B, three handwriting input screens 23 are also displayed on the screen.

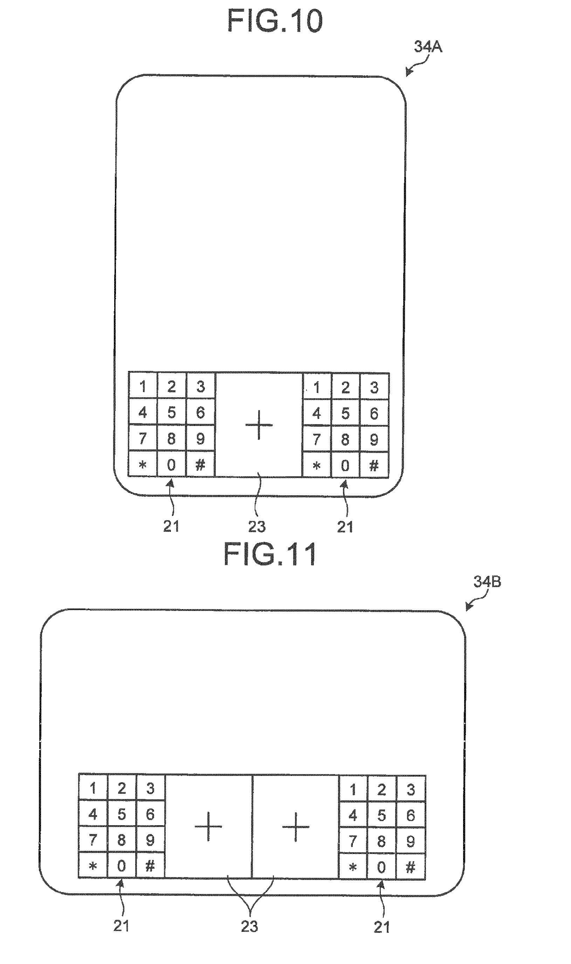

FIG. 10 is an explanatory diagram of a layout screen including ten-keys on both sides in the portrait (vertical) orientation specification. In the layout screen 34A illustrated in FIG. 10, the ten-key group 21 is displayed on both the right and left sides of the screen in the portrait (vertical) orientation specification. In the layout screen 34A, one handwriting input screen 23 is also displayed on the screen. FIG. 11 is an explanatory diagram of a layout screen including ten-keys on both sides in the landscape (horizontal) orientation specification. In the layout screen 34B illustrated in FIG. 11, the ten-key group 21 is displayed on both the right and left sides of the screen in the landscape (horizontal) orientation specification. In the layout screen 34B, two handwriting input screens 23 for handwriting are also displayed on the screen.

The CPU 19 stores the layout screen displayed last in the RAM 18. The CPU 19 determines the current orientation specifications of the mobile electronic device 1 using the tilt sensor 16 and obtains the key table 40 of the previous layout corresponding to the current orientation specifications from the ROM 17. After obtaining the key table 40 of the previous layout corresponding to the current orientation specifications, the CPU 19 generates information for drawing each key based on the values of the name 40C, the X-coordinate 40D, the Y-coordinate 40E, the key width 40F, and the key height 40G for the keys in the key table 40. The CPU 19 generates information for drawing the top surface of the key based on the key width 40F and the key height 40G with the X-coordinate 40D and the Y-coordinate 40E of the key as the origin. The CPU 19 generates drawing information for displaying in the center a name of the key on the top surface of the key based on the name 40C.

After generating the information for drawing each key in the layout screen, the CPU 19 sequentially stores the generated drawing information for each key in the RAM 18. The CPU 19 determines whether drawing information has been generated for all of the keys in the layout screen. If the drawing information has been generated for all of the keys in the layout screen, the CPU 19 displays the drawing information stored in the RAM 18 on the display screen of the display 15. If the drawing information has been generated for some of the keys rather than all of the keys in the layout screen, the CPU 19 sequentially generates the drawing information for residual keys in the layout screen. The CPU 19 generates the drawing information for each key in the layout screen in ascending order of the values in the ID 40A in the key table 40, for example.

The CPU 19 detects coordinates resulting from operations (i.e., operation coordinates) corresponding to a key operation on the display screen of the display 15 through the touch panel 14 and obtains the key code corresponding to the operation coordinates from the key table 40. After obtaining the key code corresponding to the operation coordinates, the CPU 19 notifies an application for inputting characters such as an address application (hereinafter, an application is referred to as an "app"), of the obtained key code, for example. By notifying an app for inputting characters of the key code, the CPU 19 detects that a character corresponding to the key code is input in the character input field targeted for inputting characters of the display 15.

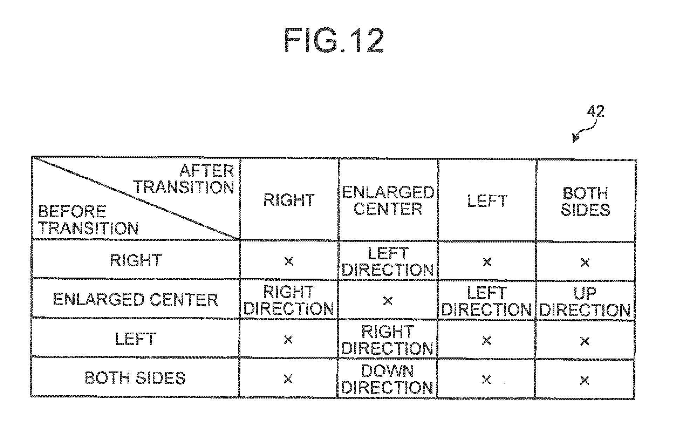

FIG. 12 is an explanatory diagram of a ten-key transition table 42 stored in the ROM 17. The ten-key transition table illustrated in FIG. 12 is a table used for determining switching transition of the layout screen including the ten-key on the right side, the layout screen including the ten-key on the left side, the layout screen including the ten-keys on both sides, and the layout screen including the layout screen including the ten-key having an enlarged center portion. The CPU 19 determines transition of the subsequent layout screen (the layout screen after transition) according to a flick operation in the right direction or a flick operation in the left direction on the layout screen before transition with reference to the ten-key transition table 42 illustrated in FIG. 12.

For example, when the layout screen 33A (33B) including the ten-key on the right side is displayed before transition and if the CPU 19 detects a flick operation in the left direction on the layout screen 33A (33B), the CPU 19 causes the screen to transition to the layout screen 32A (32B) including the ten-key having an enlarged center portion with reference to the ten-key transition table 42. When the layout screen 33A (33B) including the ten-key on the right side is displayed before transition, and if the CPU 19 detects a flick operation in the right direction, the CPU 19 does not cause the screen to transition to another layout screen.

When the layout screen 32A (32B) including the ten-key having an enlarged center portion is displayed before transition, and if the CPU 19 detects a flick operation in the left direction, the CPU 19 causes the screen to transition to the layout screen 31A (31B) including the ten-key on the left side. When the layout screen 32A (32B) including the ten-key having an enlarged center portion is displayed before transition, and if the CPU 19 detects a flick operation in the right direction, the CPU 19 causes the screen to transition to the layout screen 33A (33B) including the ten-key on the right side. When the layout screen 32A (32B) including the ten-key having an enlarged center portion is displayed before transition, and if the CPU 19 detects a flick operation in the up direction, the CPU 19 causes the screen to transition to the layout screen 34A (34B) including the ten-keys on both sides.

When the layout screen 31A (31B) including the ten-key on the left side is displayed before transition, and if the CPU 19 detects a flick operation in the right direction, the CPU 19 causes the screen to transition to the layout screen 32A (32B) including the ten-key having an enlarged center portion. When the layout screen 31A (31B) including the ten-key on the left side is displayed before transition, and if the CPU 19 detects a flick operation in the left direction, the CPU 19 does not cause the screen to transition to another layout screen.

When the layout screen 34A (34B) including the ten-keys on both sides is displayed before transition, and if the CPU 19 detects a flick operation in the down direction, the CPU 19 causes the screen to transition to the layout screen 32A (32B) including the ten-key having an enlarged center portion. When the layout screen 34A (34B) including the ten-keys on both sides is displayed before transition, and if the CPU 19 detects a flick operation in the right direction or a flick operation in the left direction, the CPU 19 does not cause the screen to transition to another layout screen.

The following describes operations of the mobile electronic device 1 according to the present embodiment.

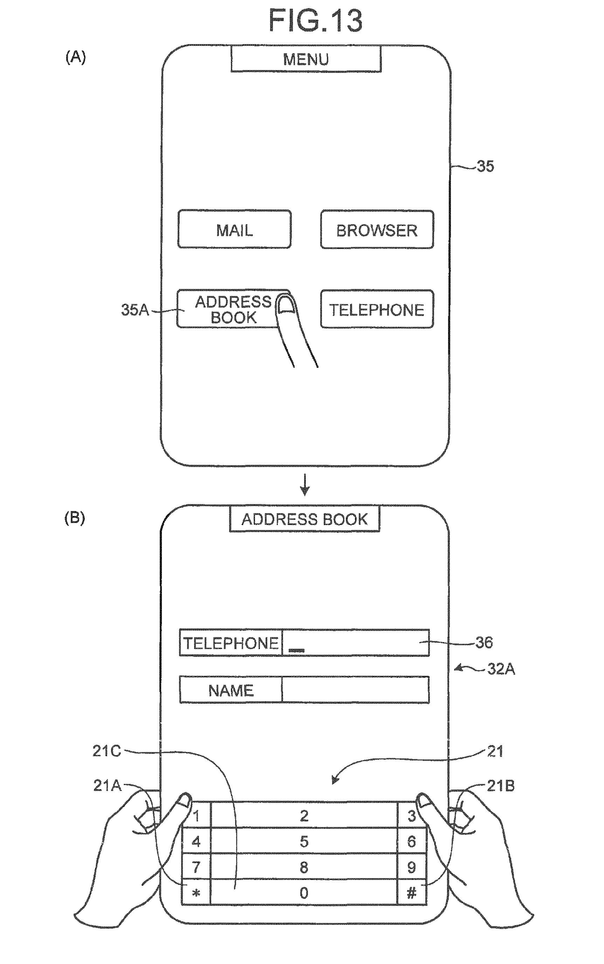

FIG. 13 is an explanatory diagram of an operation for transition to the layout screen 32A including the ten-key having an enlarged center portion in the portrait (vertical) orientation specification. The mobile electronic device 1 is presently used in the portrait (vertical) orientation, and an address book app 35A is selected from a menu screen 35 illustrated in (A) in FIG. 13, for example. On this occasion, the mobile electronic device 1 stores therein the layout screen 32A including the ten-key having an enlarged center portion as the previous layout, for example. After the address book app is selected from the menu screen, the mobile electronic device 1 displays the layout screen 32A including the ten-key group 21 illustrated in (B) in FIG. 13 because the address book app 35A includes a character input field 36. This enables a user of the mobile electronic device 1 to operate the mobile electronic device 1 using the center column key group 21C in the ten-key group 21 on the layout screen 32A including the ten-key having an enlarged center portion from both the right side and the left side while holding the mobile electronic device 1 with both hands.

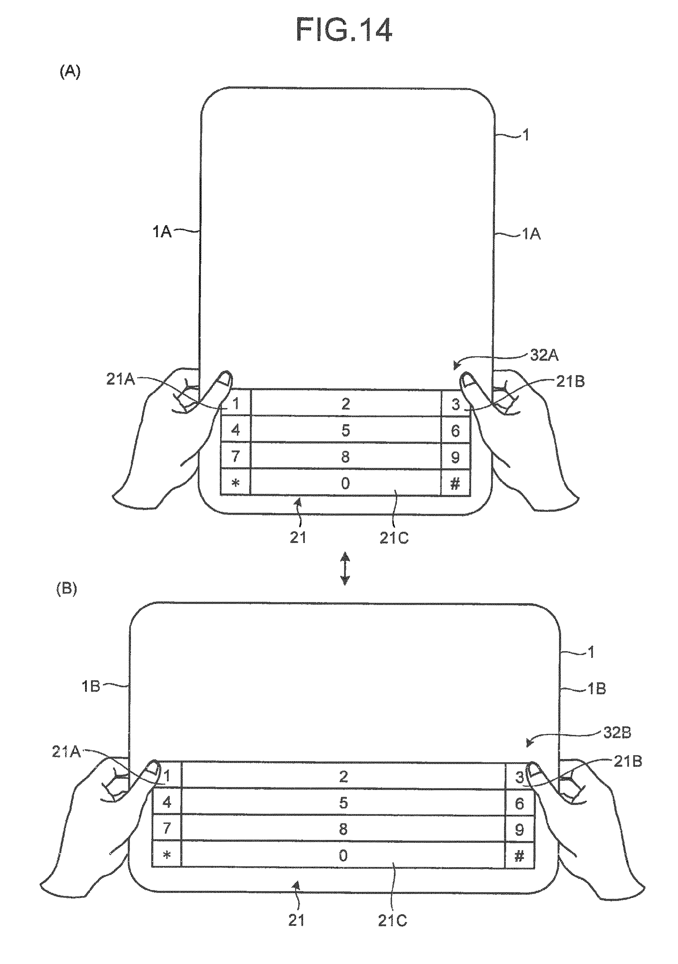

FIG. 14 is an explanatory diagram of an operation relating to switching the layout screen including the ten-key having an enlarged center portion between the portrait (vertical) orientation specification and the landscape (horizontal) orientation specification. When the mobile electronic device 1 is turned to the portrait (vertical) orientation, as illustrated in (A) in FIG. 14, the mobile electronic device 1 displays the layout screen 32A including the ten-key having an enlarged center portion in the portrait (vertical) orientation specification, for example. This enables a user of the mobile electronic device 1 to operate the mobile electronic device 1 from both the right and left sides (the long sides 1A) using the center column key group 21C in the ten-key group 21 on the layout screen 32A in the portrait (vertical) orientation specification while holding the mobile electronic device 1 at the long sides 1A with both hands.

When the mobile electronic device 1 is turned to the landscape (horizontal) orientation, as illustrated in (B) in FIG. 14, the mobile electronic device 1 displays the layout screen 32B including the ten-key having an enlarged center portion. This enables a user of the mobile electronic device 1 to operate the mobile electronic device 1 from both the right and left sides (the short sides 1B) using the center column key group 21C in the ten-key group 21 on the layout screen 32B in the landscape (horizontal) orientation specification while holding the mobile electronic device 1 at the short sides 1B with both hands.

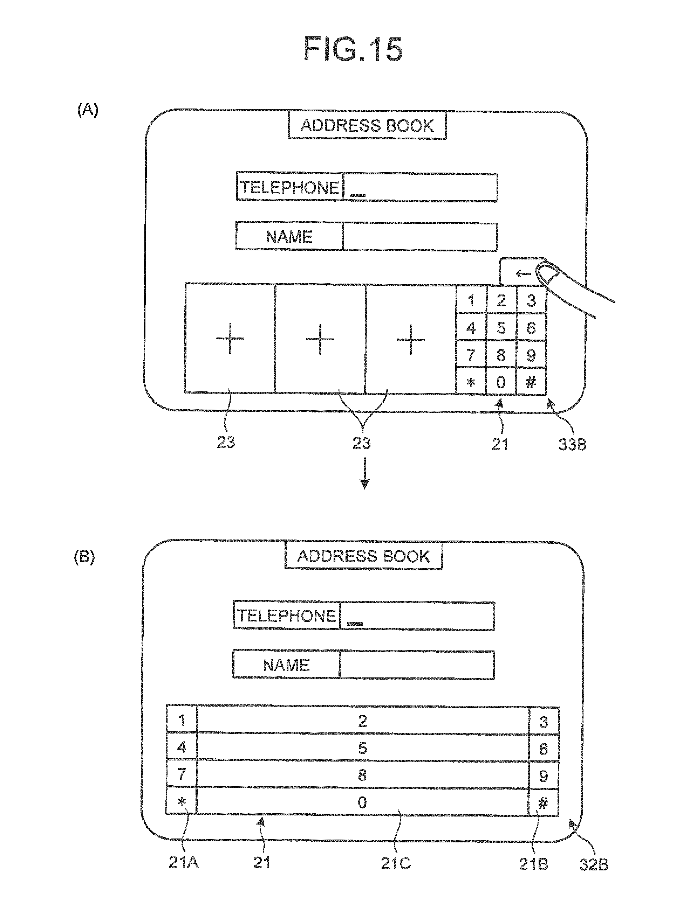

FIG. 15 is an explanatory diagram of an operation for transition to the layout screen 32B including the ten-key having an enlarged center portion in the landscape (horizontal) orientation specification. As illustrated in (A) in FIG. 15, the mobile electronic device 1 detects a flick operation in the left direction on the layout screen 33B including the ten-key on the right side in the landscape (horizontal) orientation specification. After detecting the flick operation in the left direction, the mobile electronic device 1 displays the layout screen 32B including the ten-key having an enlarged center portion in the landscape (horizontal) orientation specification as illustrated in (B) in FIG. 15. If a predetermined operation is received in the layout screen 32B, the screen can be switched to the layout screen 33B illustrated in (A) in FIG. 15.

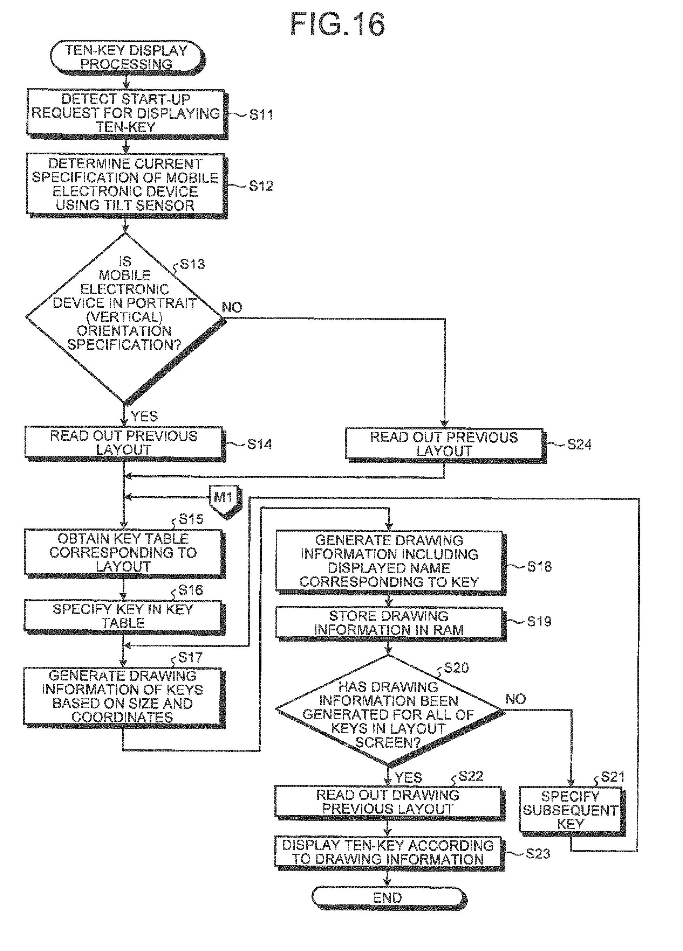

FIG. 16 is a flowchart illustrating a processing operation of the CPU 19 relating to ten-key display processing. In the ten-key display processing illustrated in FIG. 16, the ten-key group 21 is displayed on the display 15 in response to a start-up request for the ten-key group 21. As illustrated in FIG. 16, the CPU 19 detects a start-up request for a ten-key (Step S11). Specifically, when the operating system (OS) of the mobile electronic device 1 detects an operation for selecting an app on the menu screen, for example, the CPU 19 starts up the selected app, e.g., an address book app and displays the address book app on the display 15. A monitoring program that operates in parallel with the address book app monitors whether the character input field 36 for inputting characters exists in the address book app being displayed on the screen as illustrated in (B) in FIG. 13. If the character input field 36 exists in the address book app, the monitoring program requests the CPU 19 to start up and display the ten-key.

After detecting the start-up and display request for the ten-key, the CPU 19 determines the current orientation specifications of the mobile electronic device 1 using the tilt sensor 16 (Step S12). The CPU 19 determines whether the mobile electronic device 1 is presently in the portrait (vertical) orientation specification based on the determination result (Step S13). If the mobile electronic device 1 is presently in the portrait (vertical) orientation specification, the CPU 19 reads out the previous layout stored in the RAM 18 (Step S14).

The CPU 19 obtains the key table 40 corresponding to the read out previous layout from the ROM 17 (Step S15). If the previous layout is the layout screen 31A including the ten-key on the left side in the portrait (vertical) orientation specification, the CPU 19 obtains the key table 40 corresponding to the layout screen 31A including the ten-key on the left side in the portrait (vertical) orientation specification. If the previous layout is the layout screen 33A including the ten-key on the right side, the CPU 19 obtains the key table 40 corresponding to the layout screen 33A including the ten-key on the right side in the portrait (vertical) orientation specification. If the previous layout is the layout screen 34A including the ten-keys on both sides, the CPU 19 obtains the key table 40 corresponding to the layout screen 34A including the ten-keys on both sides in the portrait (vertical) orientation specification. If the previous layout is the layout screen 32A including the ten-key having an enlarged center portion, the CPU 19 obtains the key table 40 corresponding to the layout screen 32A including the ten-key having an enlarged center portion in the portrait (vertical) orientation specification.

After obtaining the key table 40 corresponding to the previous layout at Step S15, the CPU 19 specifies a key according to the layout screen determined in the key table 40 (Step S16). The keys in the layout screen are sequentially specified in ascending order of the values in the ID 40A in the key table 40. The CPU 19 specifies a key and obtains the values of the name 40C, the X-coordinate 40D, the Y-coordinate 40E, the key width 40F, and the key height 40G, corresponding to the specified keys from the key table 40. Subsequently, the CPU 19 generates the drawing information of the specified key based on the obtained values of the X-coordinate 40D, the Y-coordinate 40E, the key width 40F, and the key height 40G (Step S17). The CPU 19 then includes the obtained name 40C as a displayed name in the drawing information (Step S18). After that, the CPU 19 stores the drawing information corresponding to the specified key in the RAM 18 (Step S19).

The CPU 19 then determines whether drawing information has been generated for all of the keys in the layout screen (Step S20). If drawing information has been generated for some of the keys rather than all of the keys in the layout screen (No at Step S20), the CPU 19 specifies the subsequent key in the layout screen (Step S21) and proceeds to Step S17 for generating the drawing information of the specified key. If drawing information has been generated for all of the keys in the layout screen (Yes at Step S20), the CPU 19 reads out the previous layout stored in the RAM 18 (Step S22). The CPU 19 displays the ten-key group 21 on the display 15 by using the read out drawing information (Step S23) and ends the processing operations illustrated in FIG. 16.

If the mobile electronic device 1 is presently not in the portrait (vertical) orientation specification, (No at Step S13), the CPU 19 determines that the mobile electronic device 1 is presently in the landscape (horizontal) orientation specification and reads out the previous layout stored in the RAM 18 (Step S24), and proceeds to Step S15. If the previous layout is the layout screen 31B including the ten-key on the left side in the landscape (horizontal) orientation specification, the CPU 19 obtains the key table 40 corresponding to the layout screen 31B including the ten-key on the left side in the landscape (horizontal) orientation specification from the ROM 17. If the previous layout is the layout screen 33B including the ten-key on the right side, the CPU 19 obtains the key table 40 corresponding to the layout screen 33B including the ten-key on the right side in the landscape (horizontal) orientation specification. If the previous layout is the layout screen 34B including the ten-keys on both sides, the CPU 19 obtains the key table 40 corresponding to the layout screen 34B including the ten-keys on both sides in the landscape (horizontal) orientation specification. If the previous layout is the layout screen 32B including the ten-key having an enlarged center portion in the landscape (horizontal) orientation specification, the CPU 19 obtains the key table 40 corresponding to the layout screen 32B including the ten-key having an enlarged center portion in the landscape (horizontal) orientation specification.

As illustrated in FIG. 16, the CPU 19 determines the current orientation specification of the mobile electronic device 1 and obtains the key table 40 of the previous layout according to the specification. The CPU 19 generates the drawing information for each key based on the key table 40 and displays the generated drawing information on the display 15. This enables the mobile electronic device 1 to display the ten-key group 21 of the previous layout according to the current specification of the mobile electronic device 1 on the screen.

For the layout screen 32A including the ten-key having an enlarged center portion in the portrait (vertical) orientation specification, the CPU 19 displays the center column key group 21C of the ten-key group 21 in a large size on the screen as illustrated in FIG. 6. This enables a user of the mobile electronic device 1 to operate the mobile electronic device 1 using the center column key group 21C in the ten-key group 21 from both the right and left sides when the mobile electronic device 1 is in the portrait (vertical) orientation specification.

For the layout screen 32B including the ten-key having an enlarged center portion in the landscape (horizontal) orientation specification, the CPU 19 displays the center column key group 21C of the ten-key group 21 in a large size on the screen as illustrated in FIG. 7. This enables a user of the mobile electronic device 1 to operate the mobile electronic device 1 using the center column key group 21C in the ten-key group 21 from both the right and left sides when the mobile electronic device 1 is in the landscape (horizontal) orientation specification.

For the layout screen 34A including the ten-keys on both sides in the portrait (vertical) orientation specification, the CPU 19 displays the ten-key group 21 on both the right and left sides of the display screen as illustrated in FIG. 10. This enables a user of the mobile electronic device 1 to operate the ten-key group 21 from both the right and left sides when the mobile electronic device 1 is in the portrait (vertical) orientation specification.

For the layout screen 34B including the ten-keys on both sides in the landscape (horizontal) orientation specification, the CPU 19 displays the ten-key group 21 on both the right and left sides on the display screen as illustrated in FIG. 11. This enables a user of the mobile electronic device 1 to operate the ten-key group 21 from both the right and left sides when the mobile electronic device 1 is in the landscape (horizontal) orientation specification.

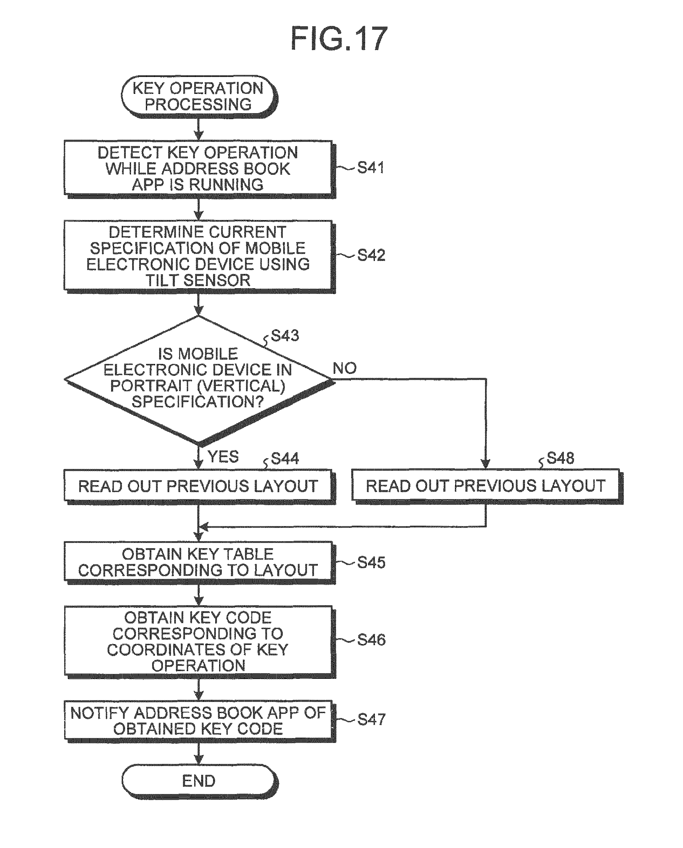

FIG. 17 is a flowchart illustrating a processing operation of the CPU 19 relating to key operation processing. In the key operation processing illustrated in FIG. 17, the processing is performed according to a key operation on the layout screen displayed on the display 15. As illustrated in FIG. 17, if the CPU 19 detects a key operation on the layout screen displayed on the display 15 while the app for inputting characters, e.g., an address book app is running (Step S41), the CPU 19 determines the current orientation specification of the mobile electronic device 1 using the tilt sensor 16 (Step S42). The CPU 19 determines whether the current orientation specification of the mobile electronic device 1 is in the portrait (vertical) orientation specification based on the determination result (Step S43).

If the current specification of the mobile electronic device 1 is in the portrait (vertical) orientation specification (Yes at Step S43), the CPU 19 reads out the previous layout stored in the RAM 18 (Step S44) and obtains the key table 40 corresponding to the read out previous layout from the ROM 17 (Step S45). After obtaining the key table 40 corresponding to the previous layout from the ROM 17, the CPU 19 obtains the key code corresponding to the operation coordinates of the key operation with reference to the key table 40 (Step S46).

After obtaining the key code corresponding to the operation coordinates of the key operation with reference to the key table 40, the CPU 19 notifies the app for inputting characters, e.g., an address book app of the key code (Step S47) and ends the processing operation illustrated in FIG. 17.

If the mobile electronic device 1 is presently not in the portrait (vertical) orientation specification, (No at Step S43), the CPU 19 determines that the mobile electronic device 1 is presently in the landscape (horizontal) orientation specification and reads out the previous layout stored in the RAM 18 (Step S48). The CPU 19 then proceeds to Step S45 for reading out the previous layout and obtaining the key table 40 corresponding to the previous layout in the landscape (horizontal) orientation specification from the ROM 17.

As illustrated in FIG. 17, if the CPU 19 detects a key operation on the layout screen corresponding to the specification of the mobile electronic device 1, the CPU 19 obtains the key code corresponding to the operation coordinates of the key operation and notifies the app for inputting characters of the key code. As a result, the mobile electronic device 1 can recognize touch operations on different layout screens in different specifications of the mobile electronic device 1.

For the layout screen 32A including the ten-key having an enlarged center portion in the portrait (vertical) orientation specification, the CPU 19 displays the center column key group 21C of the ten-key group 21 in a large size on the screen as illustrated in FIG. 6. This enables a user of the mobile electronic device 1 to operate the center column key group 21C from both the right and left sides when the mobile electronic device 1 is in the portrait (vertical) orientation specification.

For the layout screen 32B including the ten-key having an enlarged center portion in the landscape (horizontal) orientation specification, the CPU 19 displays the center column key group 21C of the ten-key group 21 in a large size on the screen as illustrated in FIG. 7. This enables a user of the mobile electronic device 1 to operate the center column key group 21C from both the right and left sides when the mobile electronic device 1 is in the landscape (horizontal) orientation specification.

For the layout screen 34A including the ten-keys on both sides in the portrait (vertical) orientation specification, the CPU 19 displays the ten-key group 21 on both the right and left sides on the display screen as illustrated in FIG. 10. This enables a user of the mobile electronic device 1 to operate the ten-key group 21 from both the right and left sides when the mobile electronic device 1 is in the portrait (vertical) orientation specification.

For the layout screen 34B including the ten-keys on both sides in the landscape (horizontal) orientation specification, the CPU 19 displays the ten-key group 21 on both the right and left sides on the display screen as illustrated in FIG. 11. This enables a user of the mobile electronic device 1 to operate the center column key group 21C from both the right and left sides when the mobile electronic device 1 is in the landscape (horizontal) orientation specification.

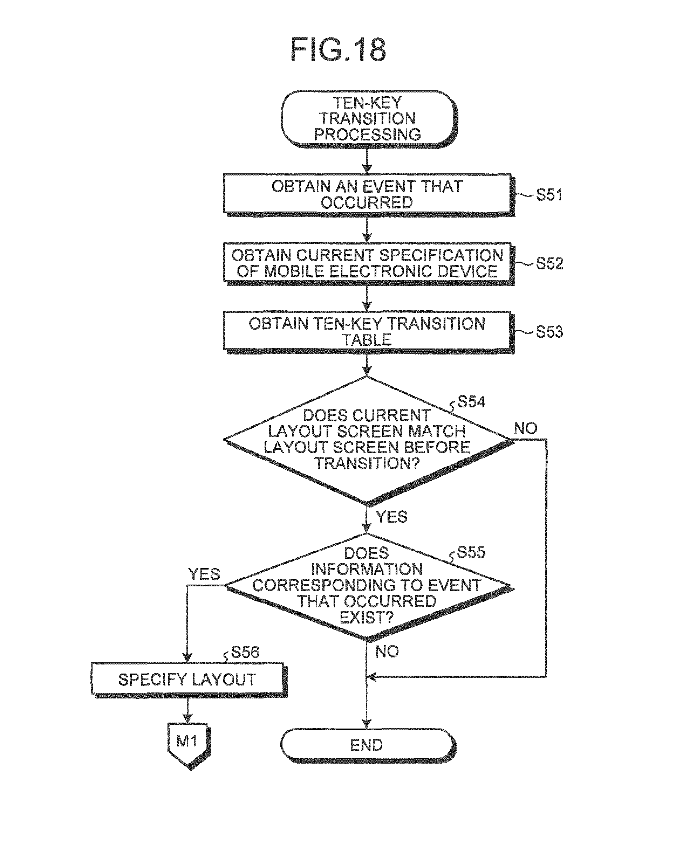

FIG. 18 is a flowchart illustrating a processing operation of the CPU 19 relating to ten-key transition processing. The ten-key transition processing illustrated in FIG. 18 causes the layout screen to transition to another layout screen according to a touch operation on the layout screen before the transition with reference to the ten-key transition table 42. As illustrated in FIG. 18, the CPU 19 obtains an event that occurred such as a touch operation on the layout screen (Step S51).

After obtaining the event that occurred such as a touch operation on the layout screen, the CPU 19 obtains the current specification of the mobile electronic device 1 (Step S52). The CPU 19 obtains the ten-key transition table 42 from the ROM 17 (Step S53), refers to the ten-key transition table 42, and determines whether the layout screen before transition corresponding to the current layout screen exists in the ten-key transition table 42 (Step S54).

If the layout screen before transition corresponding to the current layout screen does not exist (No at Step S54), the CPU 19 ends the processing operation illustrated in FIG. 18. If the layout screen before transition corresponding to the current layout screen exists (Yes at Step S54), the CPU 19 refers to the ten-key transition table 42 and determines whether the event that occurred (a flick operation in a certain direction) on the layout screen before transition exists in the ten-key transition table 42 (Step S55).

If the event that occurred on the layout screen before transition exists in the ten-key transition table 42 (Yes at Step S55), the CPU 19 specifies the layout screen in the specification corresponding to the event that occurred (Step S56), and proceeds to M1 illustrated in FIG. 16.

If the event that occurred on the layout screen before transition does not exist in the ten-key transition table 42 (No at Step S55), the CPU 19 ends the processing operations illustrated in FIG. 18.

As illustrated in FIG. 18, when the CPU 19 detects an event that occurred such as a touch operation on the layout screen, the CPU 19 refers to the ten-key transition table 42. If the layout screen corresponding to the event that occurred exists in the ten-key transition table 42, the CPU 19 causes the current screen to transition to that layout screen. This enables the mobile electronic device 1 to readily proceed to a specified layout screen according to the touch operation on the layout screen.

If the CPU 19 detects a flick operation in the right direction on the layout screen 31A (31B) including the ten-key on the left side, the CPU 19 causes the screen to transition to the layout screen 32A (32B) including the ten-key having an enlarged center portion. This enables the user of the mobile electronic device 1 to readily proceed to the layout screen 32A (32B) including the ten-key having an enlarged center portion.

If the CPU 19 detects a flick operation in the left direction on the layout screen 33A (33B) including the ten-key on the right side, the CPU 19 causes the screen to transition to the layout screen 32A (32B) including the ten-key having an enlarged center portion. This enables the user of the mobile electronic device 1 to readily proceed to the layout screen 32A (32B) including the ten-key having an enlarged center portion.

If the CPU 19 detects a flick operation in the right direction on the layout screen 32A (32B) including the ten-key having an enlarged center portion, the CPU 19 causes the screen to transition to the layout screen 33A (33B) including the ten-key on the right side. This enables the user of the mobile electronic device 1 to readily proceed to the layout screen 33A (33B) including the ten-key on the right side.

If the CPU 19 detects a flick operation in the left direction on the layout screen 32A (32B) including the ten-key having an enlarged center portion, the CPU 19 causes the screen to transition to the layout screen 31A

(31B) including the ten-key on the left side. This enables the user of the mobile electronic device 1 to readily proceed to the layout screen 31A (31B) including the ten-key on the left side.

If the CPU 19 detects a flick operation in the up direction on the layout screen 32A (32B) including the ten-key having an enlarged center portion, the CPU 19 causes the screen to transition to the layout screen 34A (34B) including the ten-keys on both sides. This enables the user of the mobile electronic device 1 to readily proceed to the layout screen 34A (34B) including the ten-keys on both sides.

If the CPU 19 detects a flick operation in the down direction on the layout screen 34A (34B) including the ten-keys on both sides, the CPU 19 causes the screen to transition to the layout screen 32A (32B) including the ten-key having an enlarged center portion. This enables the user of the mobile electronic device 1 to readily proceed to the layout screen 32A (32B) including the ten-key having an enlarged center portion.

In the embodiment, the layout screen 32A (32B) including the ten-key having an enlarged center portion is displayed on the display screen, in which the keys in the center column key group 21C in the ten-key group 21 is displayed wider than the keys in the left-side column key group 21A and the right-side column key group 21B. This enables the user of the mobile electronic device 1 to operate the center column key group 21C in the ten-key group 21 from both the right side and the left side while holding the mobile electronic device 1 with both hands. This achieves good operability of the mobile electronic device.

In the embodiment, the layout screen 34A (34B) including the ten-keys on both sides is displayed on the screen, which displays the ten-key group 21 on both the right and left sides on the screen. This enables the user of the mobile electronic device 1 to operate the ten-key group 21 from both the right and left sides while holding the mobile electronic device 1 with both hands. This achieves good operability of the mobile electronic device.

In the embodiment, if a flick operation in a certain direction on the layout screen is detected, the screen proceeds to a predetermined layout screen. This enables the user of the mobile electronic device 1 to readily proceed to a specified layout screen.

In the embodiment, the specification is determined according to the tilt of the mobile electronic device 1. If the mobile electronic device 1 is in the portrait (vertical) orientation specification, the layout screen corresponding to the portrait (vertical) orientation specification is displayed on the display 15. If the mobile electronic device 1 is in the landscape (horizontal) orientation specification, the layout screen corresponding to the landscape (horizontal) orientation specification is displayed on the display 15. This enables the user to use the mobile electronic device 1 in both the portrait (vertical) orientation specification and the landscape (horizontal) orientation specification.

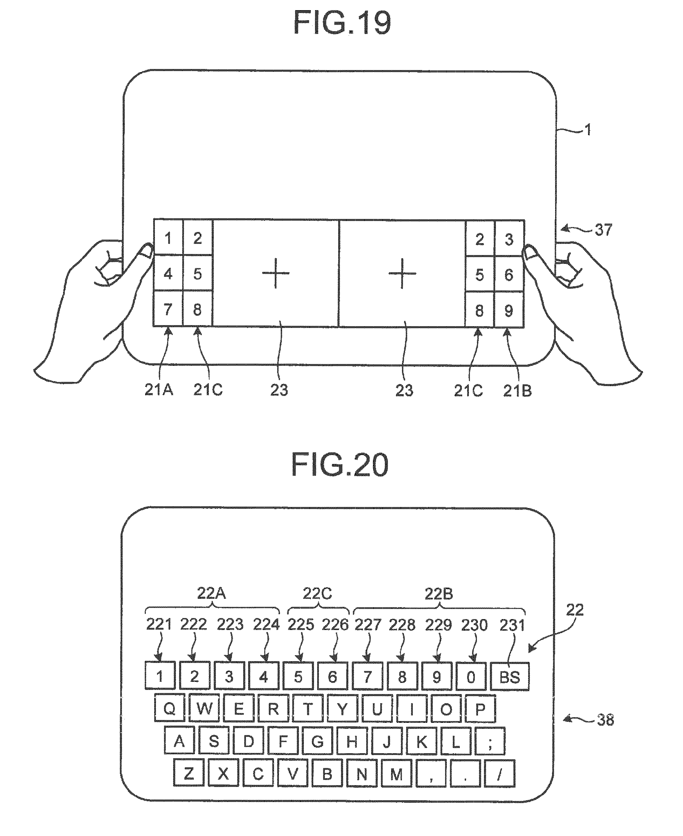

In the embodiment described above, for the layout screen 34B including the ten-keys on both sides in the landscape (horizontal) orientation specification, the ten-key group 21 is displayed on both the right and left sides of the screen. FIG. 19 is an explanatory diagram of a layout screen including another ten-key in the landscape (horizontal) orientation specification. In the layout screen 37 illustrated in FIG. 19, the left-side column key group 21A and the center column key group 21C of the ten-key group 21 are displayed on the left of the display screen, and the right-side column key group 21B and the center column key group 21C are displayed on the right of the display screen. In the layout screen 37, two handwriting input screens 23 are also displayed on the screen. This enables a user of the mobile electronic device 1 to operate the center column key group 21C of the ten-key group 21 from both the right and left sides when the mobile electronic device 1 is in the landscape (horizontal) orientation specification. The layout screen 37 illustrated in FIG. 19 is also applicable to the portrait (vertical) orientation specification of the mobile electronic device 1, which is not illustrated here.

FIG. 20 is an explanatory diagram of a layout screen including a typical keyboard in the landscape (horizontal) orientation specification. In the embodiment described above, the ten-key group 21 is displayed on the display 15, which includes the left-side column key group 21A, the center column key group 21C, and the right-side column key group 21B. The CPU 19 may display a layout screen 38 illustrated in FIG. 20. In the layout screen 38 illustrated in FIG. 20, a key group 22 in a QWERTY keyboard is displayed. The key group 22 in a QWERTY keyboard includes a left-side column key group 22A, a right-side column key group 22B, and a center column key group 22C.

The left-side column key group 22A includes a first column key group 221, a second column key group 222, a third column key group 223, and a fourth column key group 224. The first column key group 221 includes keys of "1", "Q", "A", and "Z", for example. The second column key group 222 includes keys of "2", "W", "S", and "X", for example. The third column key group 223 includes keys of "3", "E", "D", and "C", for example. The fourth column key group 224 includes keys of "4", "R", "F", and "V", for example.

The right-side column key group 22B includes a seventh column key group 227, an eighth column key group 228, a ninth column key group 229, a tenth key group 230, and a BS key 231. The seventh column key group 227 includes "7", "U", "J", and "M", for example. The eighth column key group 228 includes keys of "8", "I", "K", and ",", for example. The ninth column key group 229 includes keys of "9", "O", "L", and ".", for example. The tenth key group 230 includes keys of "0", "P", ";", and "/", for example.

The center column key group 22C includes a fifth column key group 225 and a sixth column key group 226. The fifth column key group 225 includes keys of "5", "T", "G", and "B", for example. The sixth column key group 226 includes keys of "6", "Y", "H", and "N", for example.

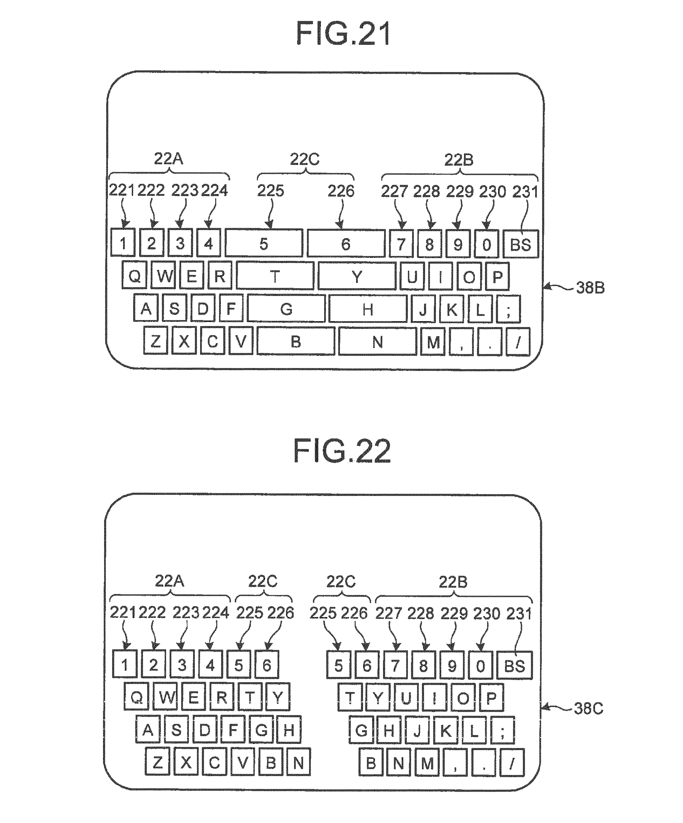

FIG. 21 is an explanatory diagram of a layout screen including another keyboard having an enlarged center portion in the landscape (horizontal) orientation specification. The CPU 19 may display a layout screen 38B illustrated in FIG. 21. In the layout screen 38B illustrated in FIG. 21, the fifth column key group 225 and the sixth column key group 226 of the center column key group 22C are displayed in a larger size than the size of the keys of the left-side column key group 22A and the right-side column key group 22B. This enables a user of the mobile electronic device 1 to operate the center column key group 22C in the center of the screen from both the right and left sides on the screen. If the CPU 19 detects a flick operation in the right direction on the layout screen 38B including a keyboard having an enlarged center portion in the landscape (horizontal) orientation specification, for example, the CPU 19 causes the screen to transition to the layout screen 38 including a typical keyboard. If the CPU 19 detects a flick operation in the right direction on the layout screen 38 including a typical keyboard in the landscape (horizontal) orientation specification, the CPU 19 causes the screen to transition to the layout screen 38 including a keyboard having an enlarged center portion.

FIG. 22 is an explanatory diagram of a layout screen including another keyboard on both sides in the landscape (horizontal) orientation specification The CPU 19 may display a layout screen 38C illustrated in FIG. 22. In the layout screen 38C illustrated in FIG. 22, the fifth column key group 225 and the sixth column key group 226 of the center column key group 22C are displayed on both the left-side column key group 22A and the right-side column key group 22B. Because the mobile electronic device 1 displays both the fifth column key group 225 and the sixth column key group 226 on both the right and left sides on the screen, thereby enabling a user of the mobile electronic device 1 to operate the center column key group 22C in the keyboard from both the right and left sides.

In the embodiment described above, the drawing information is sequentially generated for each key in the layout screen; however, the drawing information may be generated at once for all of the keys in the layout screen. The embodiment described above describes the mobile electronic device 1 in a tablet shape; however, the present invention is also applicable to smart phones or portable game consoles, for example. In the above-described embodiments, the present invention is not limited to mobile electronic devices and is also applicable to many electronic devices that receive operations through a touch panel. In the embodiment described above, four types of layout screens including the ten-key group 21 are prepared in the portrait (vertical) orientation specification and four types of layout screens including the ten-key group 21 are prepared in the landscape (horizontal) orientation specification. However, other types of layout screens may be used.

In the embodiment described above, in the mobile electronic device 1, power source is supplied from a not-illustrated battery to the RAM 18 regardless of the state (on or off) of the main power of the mobile electronic device 1. Therefore, if the main power of the mobile electronic device 1 is turned off, the RAM 18 can maintain the information in the key table 40, for example. However, the embodiment is not limited to this example. The information in the key table 40 may be stored in a flash memory such as an erasable programmable read-only memory (EPROM).

Furthermore, the units and parts illustrated in the drawings are not necessarily configured physically in the manner as illustrated in the drawings. In other words, specific configurations of the units and parts distributed or integrated are not limited to those illustrated in the drawings. More specifically, the whole or a part of the units and parts may be distributed or integrated functionally or physically in any units depending on various loads or utilization.

The whole or a part of the processing functions in the devices may be executed on a central processing unit (CPU) or a microcomputer such as a micro processing unit (MPU), and a micro controller unit (MCU). It is to be understood that the whole or a part of the processing functions may be executed on a computer program or hardware using wired logics parsed and executed by a CPU (or a microcomputer such as an MPU and an MCU).

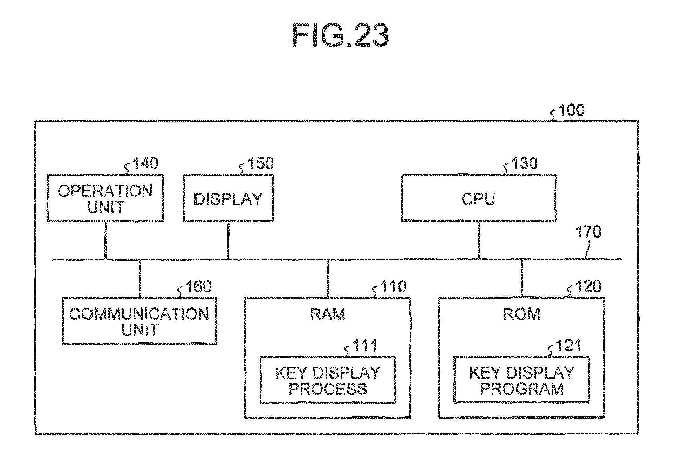

Various types of processing described in the present embodiment can be achieved by a processor such as a CPU of a mobile electronic device, which executes a prepared computer program. The following describes a mobile electronic device that causes a computer to execute a computer program that has the same function as the embodiment described above. FIG. 23 is an explanatory diagram of a mobile electronic device causing a computer to execute a key display program.

A mobile electronic device 100 that causes a computer to execute the key display program illustrated in FIG. 23 includes a random access memory (RAM) 110, a read only memory (ROM) 120, and a CPU 130. The mobile electronic device 100 also includes an operation unit 140, a display 150 having a touch panel function, and a communication unit 160. In the mobile electronic device 100, the RAM 110, the ROM 120, the CPU 130, the operation unit 140, the display 150, and the communication unit 160 are coupled to each other through a bus 170.

The ROM 120 preliminarily stores therein a key display program that functions in the same way as the above-described embodiment. The key display program may be stored in a computer-readable recording medium through a not-illustrated drive rather than the ROM 120. Examples of recording media include a portable recording media such as a compact disk read-only memory (CD-ROM), a digital versatile disk (DVD), and a universal serial bus (USB) memory, and a semiconductor memory such as a flash memory. The key display program may be appropriately distributed by the CPU 130.

The CPU 130 reads out the key display program 121 from the ROM 120 and executes the program on the RAM 110. As illustrated in FIG. 23, the key display program 121 then functions as a key display process 111 on the RAM 110.

The CPU 130 displays an operation key group on the display 150, in which a plurality of column key groups each including a plurality of keys in a column are arranged side by side on the display. When the CPU 130 displays the operation key group on the screen, a predetermined key or keys in a column key group arranged between a right-side column key group and a left-side column key group in the operation key group in a position where a user can operate the mobile electronic device using the predetermined keys from both the right side and the left side. In other words, the CPU 130 displays in a switchable manner a first arrangement of the keys in which the keys in the operation key group have the same width and a second arrangement of the keys in which a predetermined key or keys in a column key group arranged between a right-side column key group and a left-side column key group have a larger width than the keys in the right-side column key group and the left-side column key group. This enables the user of the mobile electronic device 100 to operate a predetermined key or keys from both the right side and the left side while holding the mobile electronic device 100 with both hands.

### [Explanation of Reference]

### Reference Signs List

- 1: mobile electronic device
- 14: touch panel
- 15: display
- 16: tilt sensor
- 17: ROM
- 18: RAM
- 19: CPU
- 21: ten-key group
- 21A: left-side column key group
- 21B: right-side column key group
- 21C: center column key group
- 22: key group
- 22A: left-side column key group
- 22B: right-side column key group
- 22C: center column key group
- 32A: layout screen
- 32B: layout screen

## Claims

1. A mobile electronic device comprising:
a display that comprises a touch panel function; and
a processor that displays a key on the display, wherein
when displaying an operation key group in which a plurality of column key groups each including a plurality of keys in a column are arranged side by side on the display, the processor displays in a switchable manner a first arrangement of the keys in which the keys in the operation key group have the same width and a second arrangement of the keys in which a predetermined key or keys in a column key group arranged between a right-side column key group and a left-side column key group in the operation key group have a larger width than the keys in the right-side column key group and the left-side column key group.

2. The mobile electronic device according to claim 1, further comprising:
a sensor that detects a tilt of the mobile electronic device, wherein
the processor displays the operation key group on the display, in which the first arrangement and the second arrangement are switched to each other according to the tilt of the mobile electronic device detected by the sensor.

3. A mobile electronic device comprising:
a display that comprises a touch panel function; and
a processor that displays a key on the display, wherein
when displaying an operation key group on the display in which a plurality of column key groups each including a plurality of keys in a column are arranged side by side on the display, the processor displays in a switchable manner a first arrangement of the keys in which keys in the operation key group are arranged one for each and a second arrangement in which a right-side column key group in the operation key group is arranged on the right side of a display area and a left-side column key group in the operation key group is arranged on the left side of the display area and a predetermined key or keys in a column key group arranged between the right-side column key group and the left-side column key group are arranged both on the right side of the display area and on the left side of the display area.

4. The mobile electronic device according to claim 3, further comprising:
a sensor that detects a tilt of the mobile electronic device, wherein
the processor displays the operation key group on the display, in which the first arrangement and the second arrangement are switched to each other according to the tilt of the mobile electronic device detected by the sensor.

5. A key display program for a mobile electronic device that comprises: a display that comprises a touch panel function, and a processor that displays a key on the display, the key display program causing the processor to execute:
when displaying an operation key group in which a plurality of column key groups each including a plurality of keys in a column are arranged side by side on the display, displaying in a switchable manner a first arrangement of the keys in which the keys in the operation key group have the same width and a second arrangement of the keys in which a predetermined key or keys in a column key group arranged between a right-side column key group and a left-side column key group in the operation key group have a larger width than the keys in the right-side column key group and the left-side column key group.

6. A key display program for a mobile electronic device that comprises: a display that comprises a touch panel function, and a processor that displays a key on the display, the key display program causing the processor to execute:
when displaying an operation key group in which a plurality of column key groups each including a plurality of keys in a column are arranged side by side on the display, displaying in a switchable manner a first arrangement of the keys in which keys in the operation key group are arranged one for each and a second arrangement in which a right-side column key group in the operation key group is arranged on the right side of a display area and a left-side column key group in the operation key group is arranged on the left side of the display area and a predetermined key or keys in a column key group arranged between the right-side column key group and the left-side column key group are arranged both on the right side of the display area and on the left side of the display area.
